# EUROPEAN PATENT SPECIFICATION

(11) **EP 2 287 031 B1**
(45) Date of publication and mention of the grant of the patent: **21.11.2012**
(21) Application number: 09746441.6
(22) Date of filing: 03.04.2009
(51) Int. Cl.: B62M 9/08, B62M 11/02, F16H 57/027, F16H 9/18

(54) **POWER UNIT ADAPTED FOR USE IN TWO-WHEELED MOTOR VEHICLE AND HAVING BREATHER DEVICE, AND TWO-WHEELED MOTOR VEHICLE WITH THE SAME**
FÜR EIN ZWEIRÄDRIGES KRAFTFAHRZEUG GEEIGNETES ANTRIEBSAGGREGAT MIT ENTLÜFTER SOWIE ZWEIRÄDRIGES KRAFTFAHRZEUG DAMIT
GROUPE MOTEUR CONÇU POUR ÊTRE UTILISÉ DANS UN VÉHICULE MOTORISÉ À DEUX ROUES ET COMPORTANT UN DISPOSITIF RENIFLARD, ET VÉHICULE MOTORISÉ À DEUX ROUES COMPORTANT CELUI-CI

(30) Priority: 14.05.2008 JP 2008127316
(43) Date of publication of application: 23.02.2011
(73) Proprietor: Yamaha Hatsudoki Kabushiki Kaisha, Iwata-shi, Shizuoka 438-8501 (JP)
(72) Inventor: SHIINA, Takashi, Iwata-shi Shizuoka 438-8501 (JP)
(74) Representative: Schenk, Markus
(86) International application number: PCT/JP2009/056973
(87) International publication number: WO 2009/139234

(56) References cited:
- EP-A1- 1 164 263
- JP-A- 10 068 460
- JP-A- 62 124 357
- JP-A- 2001 355 424
- JP-A- 2003 269 583
- JP-A- 2007 064 425
- JP-U- 2 072 848
- US-A- 6 015 444
- US-B1- 6 447 565

## Description

### TECHNICAL FIELD

The present invention relates to a power unit, for a motorcycle, including a breather device, and a motorcycle including the same.

### BACKGROUND ART

A power unit including a breather device is conventionally known as described in, for example, Patent Document 1 specified below. This power unit includes a case accommodating gears and a breather device having a communication path communicating the inside and the outside of the case to each other. Through the communication path, air can be guided from the inside to the outside of the case, and from the outside to the inside of the case.

### PRIOR ART DOCUMENTS

### PATENT DOCUMENTS

Patent document 1: Japanese Laid-Open Utility Model Publication for Opposition No. 59-25748 (JP 59025748 Y)

EP 1164263 A1 discloses a breather structure of an internal combustion engine for vehicles which is of a simple construction having a short breather passage and capable of preventing entry of dust into, and attachment of dust on, the breather. In the breather structure an outer cover is installed through a sound absorbing material for noise suppression on the outside of a body cover which covers a power unit including at least one of the internal combustion engine and a power transmission device. An outlet of the breather provided in the power unit is open at the sound absorbing material.

US 6447565 B1 discloses a transmission vent assembly including an apparatus having a central, internal passage extending therethrough. The internal passage has a larger diameter portion defining a pocket. A filter is disposed in the pocket to condense and return fluid to the transmission through the internal passage. The apparatus includes a shoulder adjacent the upper surface and a double lead thread initiating at the shoulder and terminating at a lower end. The assembly further includes a cup-shaped cap, press fittingly disposed over the apparatus. The cap and shoulder define an annular cavity and the cap and the double lead thread define first and second threaded passages. The cap includes an outward impression in the closed end which cooperates with the upper surface of the apparatus to define a connecting passage. Two bi-directional air flow paths extend between the transmission and the atmosphere through the internal passage, connecting air passage, annular air cavity, and each of the two threaded passages.

US 6015444 A discloses an apparatus and system for venting a transmission which provides a transmission breather which allows pressure equalization between the interior and exterior of the transmission while reducing or eliminating fluid expulsion from the transmission. The breather includes a standpipe, a bowl having a first end secured to the standpipe and at least one aperture, a shroud secured to the standpipe, and a filter disposed between the bowl and the standpipe.

### DISCLOSURE OF THE INVENTION

### PROBLEMS TO BE SOLVED BY THE INVENTION

The present inventor found a novel problem that in a power unit, for a motorcycle, including a case accommodating gears and a breather device having a communication path communicating the inside and the outside of the case to each other, unusual noise (hereinafter, referred to as "mission noise") may be occur from the inside of the case after the power unit is used for a long time.

The present invention made in light of such circumstances has an object of reducing mission noise in a power unit, for a motorcycle, including a breather device.

### MEANS FOR SOLVING THE PROBLEMS

As a result of active studies, the present inventor obtained the knowledge that dust or the like invades the inside of the case from the outside through the breather device and abrades the gears in the case, and as a result, mission noise occurs. Based on this knowledge, the present inventor took the following means.

A power unit for a motorcycle according to the present invention includes a belt type variable transmission including a primary sheave rotating based on driving of an engine of the motorcycle, a secondary sheave, a V-belt wound around the primary sheave and the secondary sheave, and a secondary sheave shaft rotating together with the secondary sheave; a plurality of gears located between the secondary sheave shaft and an axle of a driving wheel of the motorcycle and transmitting a torque of the secondary sheave shaft to the axle; a gear case accommodating the plurality of gears; and a breather device including a communication path communicating the inside and the outside of the gear case. The communication path includes a first member having a connection opening of either an inserting type or an inserted type; and a second member which is at least partially located outside of the gear case and has a connection opening, of either an inserting type or an inserted type, connected with the connection opening of the first member. The second member accommodates a filter.

According to the above-described power unit, dust or the like which enters the communication path from the outside of the case is caught by the filter. Therefore, the dust or the like is suppressed from invading the inside of the case, and is prevented from adhering to the gears. For this reason, the power unit, for a motorcycle, including a breather device according to the present invention suppresses the abrasion of the gears, and so the mission noise can be reduced.

### EFFECT OF THE INVENTION

The present invention will reduce mission noise in a power unit, for a motorcycle, including a breather device.

### BRIEF DESCRIPTION OF THE DRAWINGS

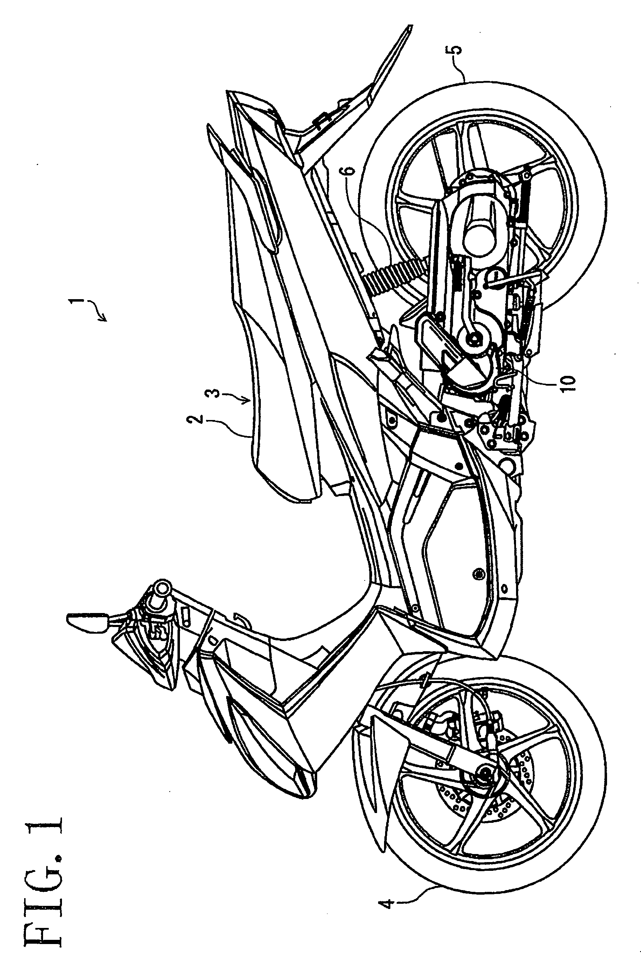

[FIG. ] FIG. 1 is a left side view of a motorcycle.
[FIG. 2] FIG. 2 is a partial plan view of a power unit according to Embodiment 1, in which a part of the power unit is cut out.
[FIG. 3] FIG. 3 is a left side view of the power unit according to Embodiment 1.
[FIG. 4] FIG. 4 is a cross-sectional view showing a structure of a breather device according to Embodiment 1.
[FIG. 5] FIG. 5 is a cross-sectional view showing a structure of the breather device according to Embodiment 1.
[FIG. 6] FIG. 6 is a cross-sectional view showing a part of a structure of the breather device according to Embodiment 1.
[FIG. 7] FIG. 7 is a partial plan view of a power unit according to Embodiment 2, in which a part of the power unit is cut out.
[FIG. 8] FIG. 8 is a left side view of the power unit according to Embodiment 2.
[FIG. 9] FIG. 9 is a cross-sectional view taken along line A-A in FIG 7, showing a structure of a breather device according to Embodiment 2.
[FIG. 10] FIG. 10 is a cross-sectional view showing a structure of a breather device according to Embodiment 3.
[FIG. 11 ] FIG. 11 provides cross-sectional views each showing a structure of the breather device according to Embodiment 3.

### BEST MODE FOR CARRYING OUT THE INVENTION

### <Embodiment 1 >

### (Overall structure of the motorcycle)

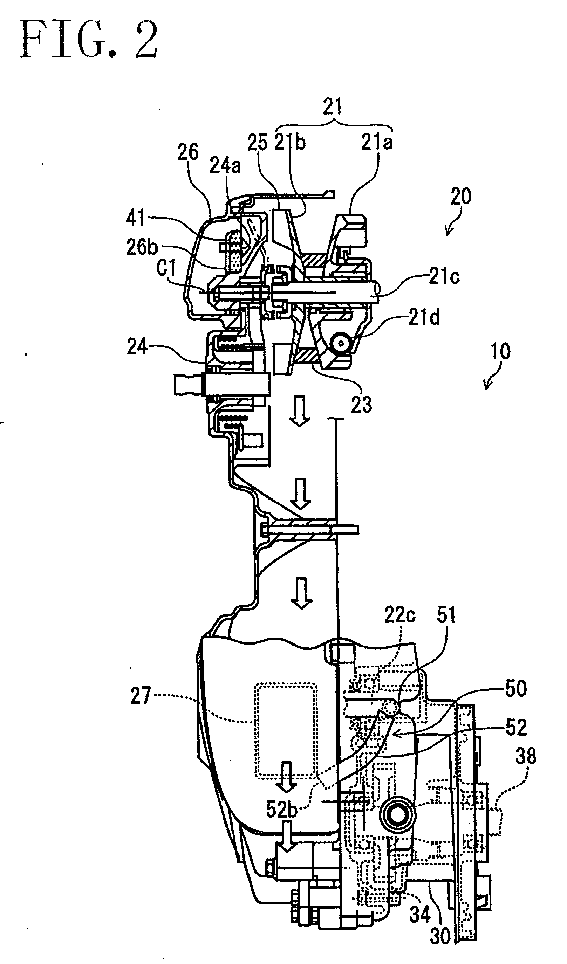

A motorcycle shown in FIG. 1 is an example of a motorcycle 1 according to this embodiment. The motorcycle 1 includes a body 3 having a seat 2, a front wheel 4, a rear wheel 5 acting as a driving wheel, and a power unit 10 driving the rear wheel 5. The power unit 10 is a so-called unit swing type power unit. A front portion of the power unit 10 is supported by a pivot shaft (not shown). In a rear portion of the power unit 10, an axle 38 (see FIG. 2) extending in a vehicle width direction (in other words, a left/right direction) is provided. The rear wheel 5 is attached to the axle 38. At a substantially central position in a front/rear direction of the power unit 10, a rear cushion unit 6 is provided. Owing to such a structure, the power unit 10 is supported by the pivot shaft so as to be swingable around the pivot shaft with respect to the body 3, and supports the rear wheel 5 so as to be rotatable.

### (Structure of the power unit)

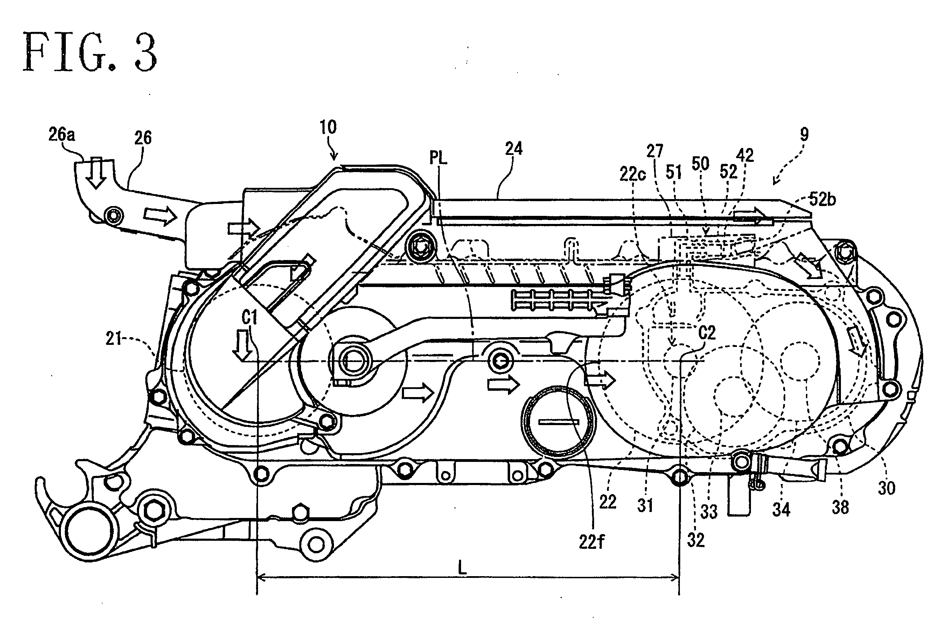

As shown in FIG. 2, the power unit 10 includes an engine (not shown) and a V-belt type variable transmission (hereinafter, referred to as "CVT" (Continuous Variable Transmission)) 20. As shown in FIG. 2, the CVT 20 includes a primary sheave 21 rotatable together with a crank shaft (not shown) of the engine, a secondary sheave 22 (see FIG. 3), and a V-belt 23 wound around the primary sheave 21 and the secondary sheave 22. The CVT 20 is located leftward with respect to the engine, and is covered with a transmission case 24. The power unit 10 includes a crank case (not shown) for covering the engine, and the transmission case 24 is located leftward with respect to the crank case.

The primary sheave 21 includes a primary sheave shaft 21 c extending in the vehicle width direction, a movable sheave 21 a fit into the primary sheave shaft 21 c, and a fixed sheave 21 b fit into the primary sheave shaft 21 c. The primary sheave shaft 21 c may be connected to the crank shaft of the engine, or a part of the crank shaft may act as the primary sheave shaft 21 c. The movable sheave 21 a and the fixed sheave 21b face each other in the vehicle width direction. A belt groove is formed between the movable sheave 21 a and the fixed sheave 21 b, and the V-belt 23 is held in the belt groove. The movable sheave 21 a rotates together with the primary sheave shaft 21c and is movable in an axial direction thereof. By contrast, the fixed sheave 21b rotates together with the primary sheave shaft 21c but is not movable in an axial direction thereof.

In rearward of the movable sheave 21 a, a centrifugal weight 21d is located. The centrifugal weight 21 d moves inward in a radial direction of the primary sheave 21 when the rotation speed of the primary sheave 21 decreases, and moves outward in the radial direction by a centrifugal force when the rotation speed of the primary sheave 21 increases. Owing to this, when the rotation speed of the primary sheave 21 decreases, the movable sheave 21a is separated from the fixed sheave 21b, and thus the winding diameter of the V-belt 23 around the primary sheave 21 decreases. Namely, the CVT 20 is put into the state shown in FIG. 2 above the primary sheave shaft 21c. As a result, the transmission ratio of the CVT 20 increases. By contrast, when the rotation speed of the primary sheave 21 increases, the centrifugal weight 21 d pushes the movable sheave 21 a toward the fixed sheave 21b, and thus the movable sheave 21a approaches the fixed sheave 21b. Namely, the CVT 20 is put into the state shown in FIG. 2 below the primary sheave shaft 21c. As a result, the winding diameter of the V-belt 23 around the primary sheave 21 increases, and the transmission ratio of the CVT 20 decreases.

Although partially omitted in the figure, the secondary sheave 22 includes a secondary sheave shaft 22c extending in the vehicle width direction, a movable sheave fit into the secondary sheave shaft 22c, and a fixed sheave fit into the secondary sheave shaft 22c. The movable sheave and the fixed sheave face each other in the vehicle width direction, and a belt groove is formed therebetween. The movable sheave rotates together with the secondary sheave shaft 22c and is movable in an axial direction thereof. By contrast, the fixed sheave rotates together with the secondary sheave shaft 22c but is not movable in an axial direction thereof.

Inside the transmission case 24, a flow path of air for cooling the CVT 20 is formed. As shown in FIG. 2, a plurality of fins 25 is formed leftward with respect to the fixed sheave 21 b of the primary sheave 21. The fixed sheave 21 b is rotated to rotate the fins 25 and thus to transport the air. In other words, a cooling fan is formed by the fins 25. As shown in FIG. 3, an intake duct 26 for introducing air from the outside of the transmission case 24 is connected to a front portion of the transmission case 24. The intake duct 26 has an entrance 26a opened upward and an exit 26b (see FIG. 2) opened rightward toward the primary sheave 21, and meanders overall. The transmission case 24 has an intake section 24a, for introducing air, formed leftward with respect to the fixed sheave 21b. The exit 26b of the intake duct 26 is connected to the intake section 24a. A first filter 41 is located between the exit 26b of the intake duct 26 and the intake section 24a of the transmission case 24. The intake duct 26 is not specifically limited to have any specific shape and does not need to meander as is in this embodiment. The intake duct 26 is not absolutely necessary and may be omitted.

As shown in FIG. 2 and FIG. 3 with arrows, the air sucked into the transmission case 24 from the intake duct 26 flows around the primary sheave 21, then rearward, and around the secondary sheave 22. Above the secondary sheave 22, a duct 27 opened upward is formed. The air, which has flown around the secondary sheave 22, flows upward through the duct 27, then flows downward in a rear portion of the transmission case 24, and flows out from the transmission case 24.

As shown in FIG. 2, a gear case 30 is located rightward with respect to the transmission case 24, namely, on the vehicle center side of the transmission case 24 in the vehicle width direction. In other words, the gear case 30 is located adjacent to the transmission case 24 in the axial direction of the secondary sheave shaft 22c.

As shown in FIG. 3, the gear case 30 accommodates a first gear 31, a second gear 32, a third gear 33 and a fourth gear 34. The gears 31, 32, 33 and 34 transmit the rotation of the secondary sheave shaft 22c to the axle 38. The secondary sheave shaft 22c runs throughout the transmission case 24 in the vehicle width direction and extends into the gear case 30. The first gear 31 is formed at a position, in the gear case 30, corresponding to the secondary sheave shaft 22c, and rotates along with the secondary sheave shaft 22c. The first gear 31 may be attached to, or integrated with, the secondary sheave shaft 22c. The first gear 31 is engaged with the second gear 32 having a larger diameter than that of the first gear 31. The third gear 33 is located coaxially with the second gear 32, and rotates along with the second gear 32. The second gear 32 and the third gear 33 may be integral with, or separate from, each other. The third gear 33 is engaged with the fourth gear 34 having a larger diameter than that of the third gear 33. Into the center of the fourth gear 34, the axle 38 is fit. The axle 38 rotates together with the fourth gear 34. As described above, the rear wheel 5 is attached to the axle 38. Owing to such a structure, the rotation of the secondary sheave 22 is decelerated by the plurality of gears 31 through 34, and then is transmitted to the rear wheel 5.

The power unit 10 according to this embodiment includes a breather device 9 having a communication path 50. The inside of the gear case 30 and the inside of the transmission case 24 are communicated to each other via the communication path 50. While the power unit 10 is being driven, the temperature inside of the gear case 30 increases and the air in the gear case 30 expands. As a result, the pressure inside of the gear case 30 becomes higher than the pressure outside of the gear case 30. By contrast, after the engine of the power unit 10 is stopped, the temperature inside of the gear unit 30 decreases. In the case where the motorcycle 1 runs on a puddle or the like, the gear case 30 may be cooled down rapidly. In such a case, the air inside of the gear case 30 contracts and so the pressure inside of the gear case 30 becomes lower than the pressure outside of the gear case 30. In this manner, the pressure may be different between the inside and the outside of the gear case 30 in the power unit 10.

However, the power unit 10 according to this embodiment includes the communication path 50 for communicating the inside and the outside of the gear case 30 to each other. Therefore, when the pressure inside of the gear case 30 increases, the air inside of the gear case 30 is discharged outside through the communication path 50. By contrast, when the pressure inside of the gear case 30 decreases, air is supplied from the outside to the inside of the gear case 30 through the communication path 50. In this manner, the pressure difference between the inside and the outside of the gear case 30 is relaxed in the power unit 10 according to this embodiment.

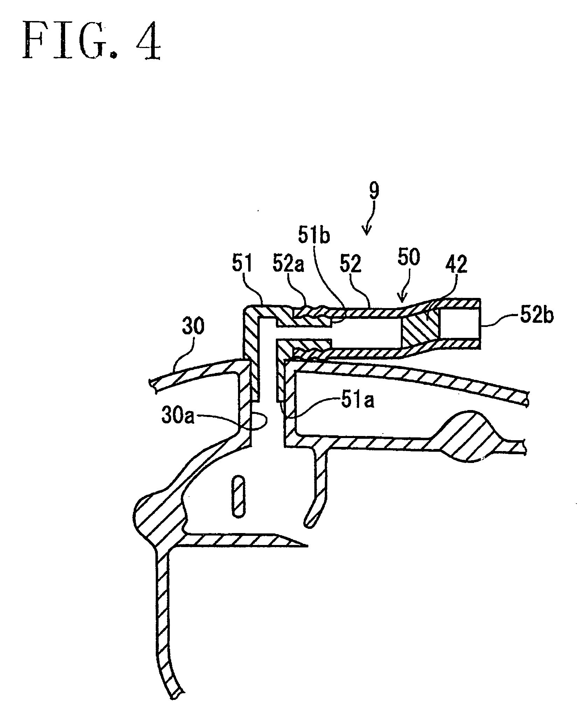

In this embodiment, the communication path 50 includes a cartridge 51 fit into the gear case 30 and a hose 52 inserted into the cartridge 51. The cartridge 51 is formed of a synthetic resin. As shown in FIG. 4, the cartridge 51 includes an insertion joint 51a extending downward and an insertion joint 51b extending horizontally. The gear case 30 has a hole 30a. The cartridge 51 is fixed to the gear case 30 by the insertion joint 51a being inserted into the hole 30a. One end 52a of the hose 52 is inserted into the insertion joint 51b of the cartridge 51. The other end 52b of the hose 52 is opened toward the inside of the transmission case 24. Namely, the end 52b of the hose 52 is an open end. The hose 52 is formed of a flexible material, for example, a synthetic resin or the like. There is no specific limitation on the material of the hose 52.

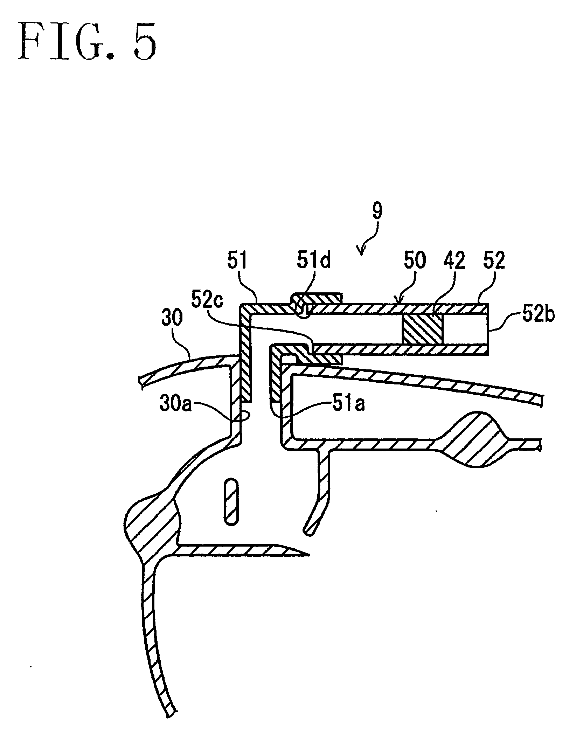

As described above, the cartridge 51 has the insertion joint 51b, and the hose 52 has the open end 52a. Into the open end 52a of the hose 52, the insertion joint 51b of the cartridge 51 is inserted. In this embodiment, the end 52a of the hose 52 acts as a connection opening of the hose 52, and the insertion joint 51b of the cartridge 51 acts as a connection opening of the cartridge 51. The insertion joint 51b of the cartridge 51 is inserted into the end 52a of the hose 52, and thus the hose 52 and the cartridge 51 are connected to each other. Alternatively, as shown in FIG. 5, the cartridge 51 may have a receiving joint 51d, and the hose 52 may have an insertion joint 52c which is inserted into the receiving joint 51d of the cartridge 51. In this case, the insertion joint 52c of the hose 52 acts as a connection opening of the hose 52, and the receiving joint 51d of the cartridge 51 acts as a connection opening of the cartridge 51.

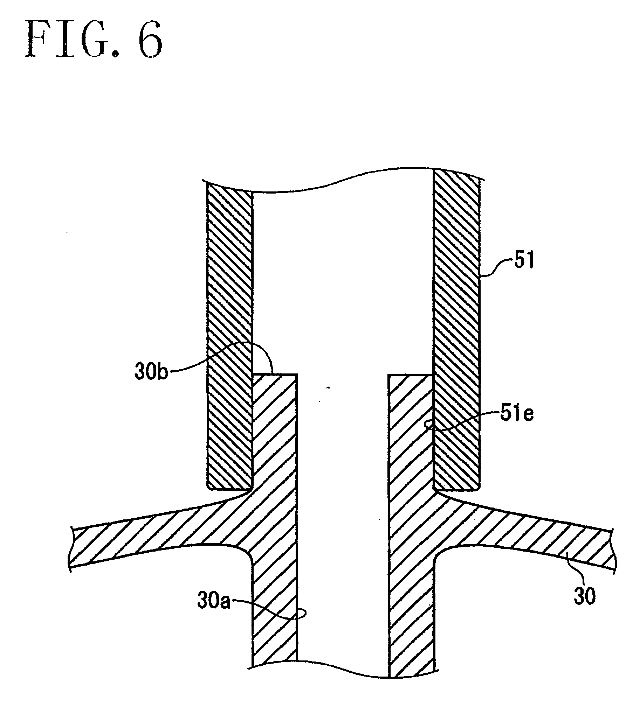

As shown in FIG. 6, the gear case 30 may include a tubular member having a generally cylindrical shape. In this embodiment, the tubular member is an insertion joint 30b formed on a surface of the gear case 30. The insertion joint 30b is formed to extend from the hole 30a to the inside and the outside of the gear case 30, and surrounds the hole 30a. In this case, a receiving joint 51e into which the insertion joint 30b is inserted is formed in a bottom portion of the cartridge 51. Owing to such a structure, the cartridge 51 is fixed to the gear case 30. Into the hole 30a, another member having a generally cylindrical shape may be inserted. In this case, the another member is inserted into the receiving joint 51e of the cartridge 51. Namely, the cartridge 51 may be fixed to the gear case 30 via another member.

As shown in FIG. 2, the communication path 50 communicates the inside of the gear case 30 and the inside of the transmission case 24 to each other. In this embodiment, one end of the communication path 50 is the insertion joint 51a of the cartridge 51 attached to the gear case 30, and the other end of the communication path 50 is the open end 52b (see FIG. 4) of the hose 52 opened toward the inside of the transmission case 24. Thus, the communication path 50 is not exposed outside of the power unit 10, and so is prevented from sucking dust or the like from the outside of the power unit 10.

Inside the hose 52, a second filter 42 is provided. In this embodiment, the second filter 42 is formed of the same material as that of the first filter 41. The second filter 42 has the same degree of pore fineness as that of the first filter 41. The first filter 41 and the second filter 42 may be formed of different materials from each other. The first filter 41 and the second filter 42 may have different degrees of pore fineness from each other. For example, the second filter 42 may have a higher degree of pore fineness than that of the first filter 41.

There is no specific limitation on the position of the filter 42 in the hose 42. In this embodiment, the filter 42 is located deeper than the end 52b (i.e., the open end) of the hose 52. By locating the second filter 42 deeper in the hose 52, the filter 42 can be prevented more securely from coming off from the hose 52.

### (Effect of the embodiment)

As described above, according to this embodiment, the communication path 50 communicating the inside and the outside of the gear case 30 to each other is provided, and thus the pressure difference between the inside and the outside of the gear case 30 can be alleviated. In addition, the filter 42 is located inside of the communication path 50. Therefore, dust or the like, which is likely to invade the inside of the gear case 30 through the communication path 50 from the outside, is caught by the filter 42. Thus, the invasion of the dust or the like into the inside of the gear case 30 is suppressed. Accordingly, the dust or the like is suppressed from adhering to the gears 31 through 34, which protects the gears 31 through 34 against deterioration. As a result, mission noise will be suppressed from occurring and will be reduced.

The communication path 50 includes the flexible hose 52, and the filter 42 is located inside of the hose 52. The communication path 50 having the filter 42 built therein can be easily realized merely by a simple operation of inserting the filter 42 into the hose 52 from the end 52b.

According to this embodiment, the end 52b of the communication path 50 is opened toward the inside of the transmission case 24. The filter 41 is located on an entrance side of the transmission case 24. Therefore, the two filters 41 and 42 are located between the inside of the gear case 30 and the outside of the power unit 10. Owing to these two filters 41 and 42, dust or the like is prevented from invading the inside of the gear case 30 in a two-fold manner. Accordingly, the invasion of the dust or the like into the inside of the gear case 30 can be prevented more effectively.

Also according to this embodiment, the communication path 50 is relatively short. Specifically, the gear case 30 is located rightward with respect to the transmission case 24. As shown in FIG. 3, as seen from the side (in other words, as seen in the axial direction of the secondary sheave shaft 22c), the communication path 50 is shorter than length L, which is the length between center C1 of the primary sheave 21 and center C2 of the secondary sheave 22. In addition, the communication path 50 is located between a front end 22f of the secondary sheave 22 and the axle 38. In order to suppress the invasion of dust or the like into the inside of the gear case 30, it is conceivable to make the communication path 50 longer. On the contrary, this embodiment allows the communication path 50 to be short and compact. Since the filter 42 is located inside of the communication path 50, the invasion of dust of the like into the inside of the gear case 30 can be sufficiently suppressed even though the communication path 50 is relatively short.

According to this embodiment, the open end 52b of the communication path 50 is located at a relatively high level. In more detail, the open end 52b of the communication path 50 is located above line PL connecting the center C1 of the primary sheave 21 and the center C2 of the secondary sheave 22. Therefore, the communication path 50 according to this embodiment can suppress the invasion of dust or the like more than in the case where the open end 52b is located below the line PL.

In this embodiment, the communication path 50 is attached to the gear case 30 such that the cartridge 51 and the hose 52 are easily detached from the outside of the gear case 30. For example, the cartridge 51 of the communication path 50 has a simple structure in which the insertion joint 51a is inserted into the hole 30a of the gear case 30 (see FIG. 4). Therefore, the cartridge 51 is easily detached from the outside of the gear case 30. The hose 52 and the cartridge 51 have a simple structure in which the end 52a of the hose 52 is attached to the insertion joint 51b (see FIG. 4) of the cartridge 51 or the receiving joint 51d (see FIG. 5) of the cartridge 51. This allows the hose 52 to be easily detached from the cartridge 51 or the gear case 30. The filter 42 provided inside of the hose 52 is easily exchangeable by a simple method of detaching the hose 52 from the cartridge 51 or the gear case 30. Namely, the power unit 10 including the breather device 9 according to this embodiment improves the ease of maintenance of the breather device 9.

### <Embodiment 2>

In a power unit 10 according to Embodiment 2, the transmission case 24, the gear case 30 and the communication path 50 are different from those of Embodiment 1. In the following description, substantially the same elements as those of Embodiment 1 will bear the same reference numerals therewith and descriptions thereof will be omitted.

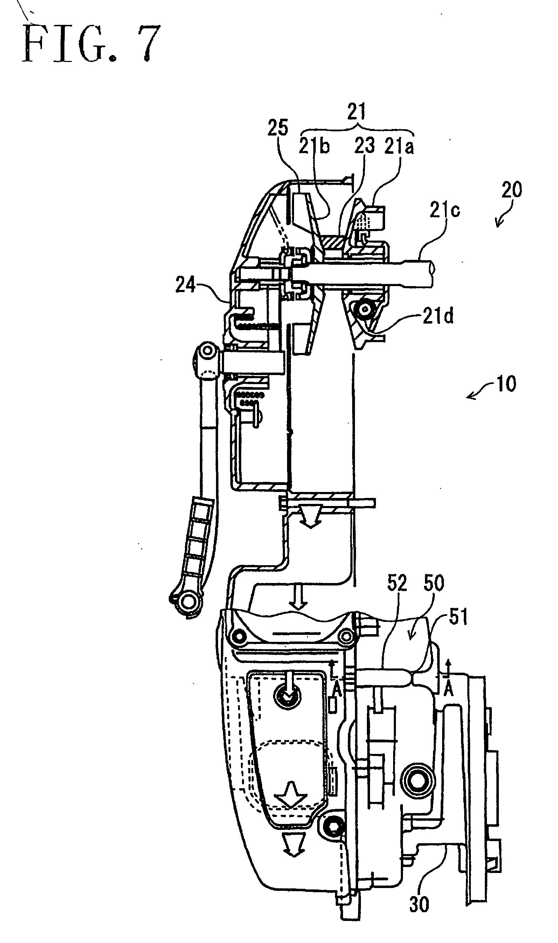

As shown in FIG. 7, the power unit 10 according to this embodiment also includes the transmission case 24 and the gear case 30. The transmission case 24 accommodates the CVT 20. Although not shown, a plurality of gears for transmitting the rotation of the secondary sheave shaft of the CVT 20 to the axle is located in the gear case 30 as in Embodiment 1.

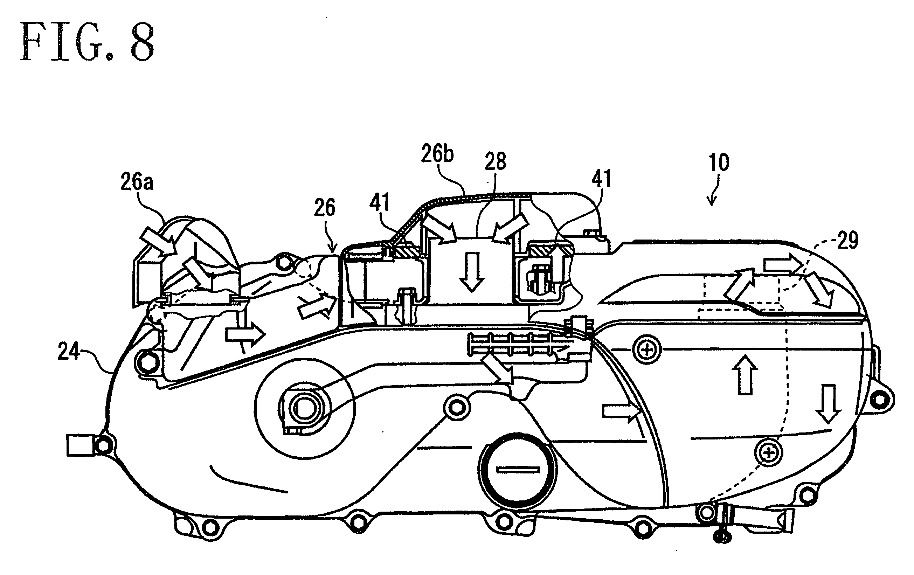

In this embodiment, as shown in FIG. 8, a duct 28 for introducing air from above is formed in the transmission case 24. The intake duct 26 sucking air into the transmission case 24 is formed to guide the air to the duct 28. The intake duct 26 has the entrance 26a located in a front and top portion of the transmission case 24 and the generally dome-shaped exit 26b surrounding the duct 28. The air sucked from the entrance 26a flows generally rearward in the duct 28, flows upward at the exit 26b, and then flows downward to an inner portion of the duct 28.

In this embodiment, the first filter 41 is located inside of the exit 26b of the intake duct 26. The first filter 41 is generally shaped like a ring to surround the duct 28. The first filter 41 is not limited to being ring-shaped and may have a different shape.

In the transmission case 24, a flow path for allowing air to flow as described below is formed. The air introduced from the duct 28 flows around the primary sheave 21 and the secondary sheave 22, then is guided upward through a take-out duct 29, then flows downward in a rear portion of the transmission case 24, and flows out from the transmission case 24.

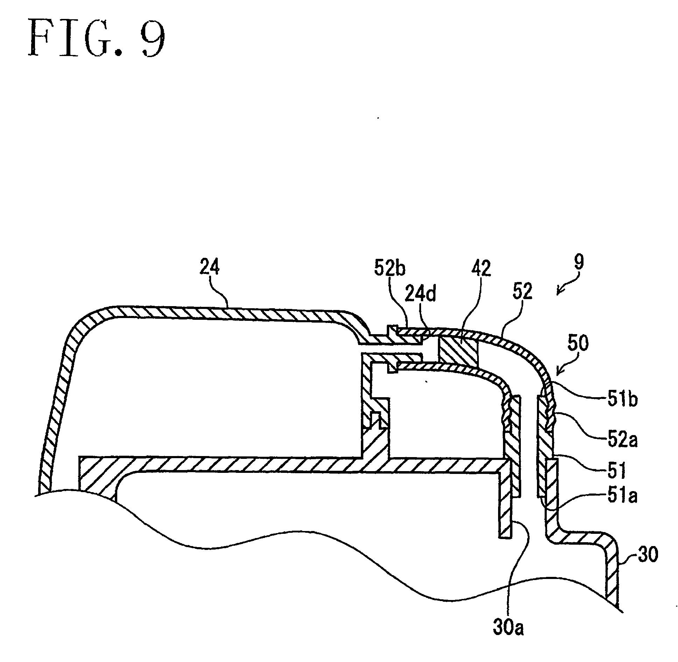

As shown in FIG. 9, in this embodiment also, the communication path 50 includes the cartridge 51 and the hose 52. In this embodiment, the cartridge 51 includes the insertion joint 51a extending downward and the insertion joint 51b extending upward. The insertion joint 51a is inserted into the hole 30a of the gear case 30. One end 52a of the hose 52 is fit into the insertion joint 51b. In this embodiment, an insertion joint 24d extending rightward is formed in the transmission case 24. The other end 52b of the hose 52 is fit into the insertion joint 24d. In this embodiment also, the end 52b of the hose 52 acts as an open end opened toward the inside of the transmission case 24. Owing to such a structure, the inside of the gear case 30 and the inside of the transmission case 24 are communicated to each other via the communication path 50.

In this embodiment also, the end 52a of the hose 52 acts as a connection opening of the hose 52, and the insertion joint 51b of the cartridge 51 acts as a connection opening of the cartridge 51. The insertion joint 51b of the cartridge 51 is inserted into the end 52a of the hose 52, and thus the hose 52 and the cartridge 51 are connected to each other. As in Embodiment 1, the cartridge 51 of the communication path 50 may have a receiving joint 51d, and the hose 52 may have an insertion joint 52c which is inserted into the receiving joint 51d of the cartridge 51 (see FIG. 5). Although not shown, the transmission case 24 may have a receiving joint, extending rightward, into which the end 52b of the hose 52 is inserted. The gear case 30 may have a generally cylindrical insertion joint extending from the hole 30a to the inside and the outside of the gear case 30 and surrounding the hole 30a (see FIG. 6).

As shown in FIG. 7, in this embodiment, the hose 52 is located to extend in the vehicle width direction. In other words, the hose 52 extends perpendicular to the front/rear direction of the vehicle. Therefore, the hose 52 is shorter than in Embodiment 1. The same is applied to the communication path 50. In this embodiment also, the filter 42 is located inside of the hose 52.

In this embodiment also, the same effects as those of Embodiment 1 are provided.

### <Embodiment 3>

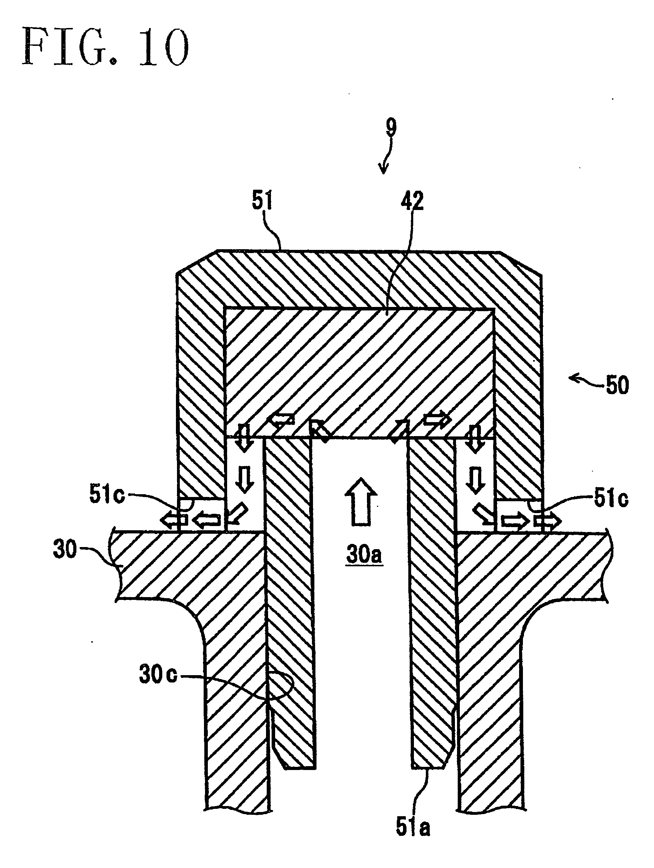

In a power unit 10 according to Embodiment 3, the communication path 50 is formed only of the cartridge 51 described in Embodiment 1. As shown in FIG. 10, in Embodiment 3, the cartridge 51 has the insertion joint 51a inserted into the hole 30a of the gear case 30, but does not have any insertion joint for attaching the hose thereto. The cartridge 51 is cap-shaped. A plurality of communication holes 51c running from the inside to the outside of the cartridge 51 is formed in a side surface of the cartridge 51. There is no limitation on the position or size of the communication holes 51 c. The inside of the transmission case 24 and the inside of the gear case 30 are communicated to each other via the cartridge 51.

As shown in FIG. 10, the gear case 30 has a tubular portion 30c having a generally cylindrical shape and formed to extend from the hole 30a to the inside and the outside of the gear case 30. Thus, the tubular portion 30c surrounds the hole 30a, and acts as a receiving joint. The cartridge 51 is fixed to the gear case 30 by the insertion joint 51a being inserted into the tubular portion 30c. The tubular portion 30a does not need to be integral with the gear case 30. More specifically, another member having a generally cylindrical shape may be inserted into the hole 30a of the gear case 30, and the communication path 50 may be formed of the another member and the cartridge 51.

In this embodiment, the tubular portion 30c having the generally cylindrical shape acts as a connection opening, and the insertion joint 51a of the cartridge 51 acts as a connection opening of the cartridge 51. The insertion joint 51a of the cartridge 51 is inserted into the tubular portion 30c, and thus the cartridge 51 and the tubular portion 30c are connected to each other.

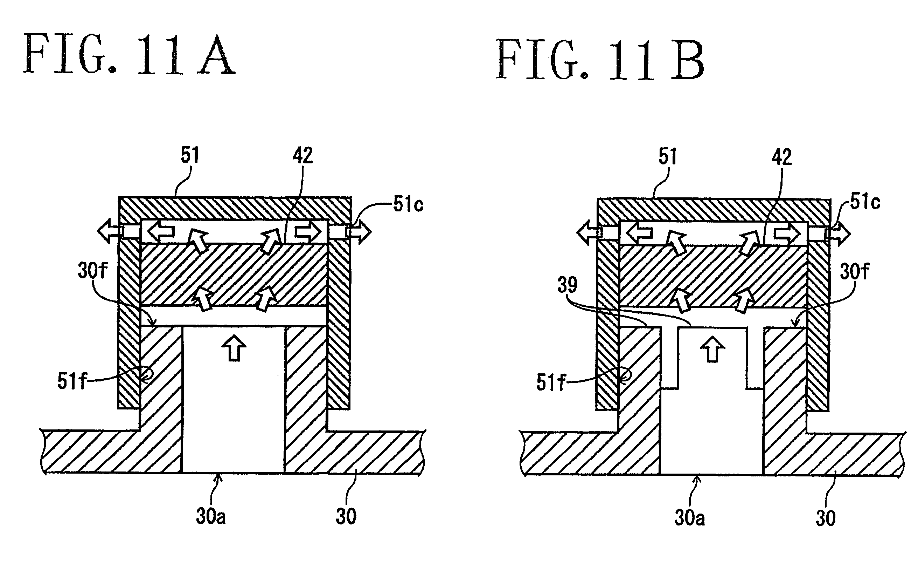

As shown in FIG. 11A and FIG. 11B, the gear case 30 may have a tubular portion 30f formed therein. The tubular portion 30f is formed to extend from the hole 30a to the inside and the outside of the gear case 30. Thus, the tubular portion 30f surrounds the hole 30a, and acts as an insertion joint. In this case, the cartridge 51 has a receiving joint 51f into which the tubular portion 30f is inserted, but does not have any insertion joint or receiving joint for attaching the hose thereto. The cartridge 51 is fixed to the gear case 30 by the tubular portion 30f being inserted into the receiving joint 51f. In the breather device 9 shown in each of FIG. 11A and FIG. 11B, the tubular portion 30f having a generally cylindrical shape acts as a connection opening, and the receiving joint 51f of the cartridge 51 acts as a connection opening of the cartridge 51. The tubular portion 30f is inserted into the receiving joint 5*1*f of the cartridge 51, and thus the cartridge 51 and the tubular portion 30f are connected to each other.

The tubular portion 30f does not need to be integral with the gear case 30, and another member having a generally cylindrical shape may be inserted into the hole 30a of the gear case 30. As shown in FIG. 11B, the tubular portion 30f may have a plurality of claws 39. In the case where the tubular portion 30f has the plurality of claws 39 and a plurality of gaps, each of the gaps being formed between each adjacent two claws among the plurality of claws 39, it is easier to attach or detach the cartridge 51 and the cartridge 51 is fixed to the tubular portion 30f more securely.

In this embodiment, the second filter 42 is accommodated inside of the cartridge 51. Namely, the second filter 42 is built in the cartridge 51 beforehand. In FIG. 10, FIG. 11A and FIG. 11B, the arrows indicate the flow of air from the inside to the outside of the gear case 30. In this embodiment also, the filter 42 prevents the invasion of dust or the like from the outside of the gear case 30.

In FIG. 10, the second filter 42 is located between the communication holes 51 c and the insertion joint 51a in the cartridge 51. In other words, the second filter 42 is located between the communication holes 51c and the insertion joint 51a of the cartridge 51 in the communication path 50. By contrast, in FIG. 11A and FIG. 11B, the second filter 42 is located between the communication holes 51c and the receiving joint 51d in the cartridge 51. In other words, the second filter 42 is located between the communication holes 51c and the tubular portion 30f in the communication path 50.

In this embodiment also, the same effects as those of Embodiments 1 and 2 are provided. In addition, in this embodiment, unlike in Embodiments 1 and 2, the hose 52 is unnecessary. Therefore, the number of elements can be reduced. The communication path 50 can be still shorter and still more compact. In the case where the power unit 10 includes the hose 52, the power unit 10 may occasionally vibrate and the hose 52 may also vibrate while the motorcycle 1 is in motion. However, in this embodiment, the power unit 10 does not include the hose 52 and so such a vibration of the hose 52 does not occur. For this reason, the durability and the reliability of the communication path 50 can be further improved.

### <Modification examples>

The power unit 10 in each of the above-described embodiments is a so-called unit swing type power unit, which is supported so as to be swingable with respect to the body 3. A power unit according to the present invention may be supported so as not to swingable with respect to the body.

There is no limitation on the type or number of the gears located in the gear case 30. There is no limitation on the shape of the gears.

A motorcycle according to the present invention may be of a moped type, a scooter type or any other type.

### DESCRIPTION OF THE REFERENCE NUMERALS

- 1: Motorcycle
- 5: Rear wheel (driving wheel)
- 9: Breather device
- 10: Power unit
- 20: Belt type variable transmission
- 21: Primary sheave
- 22: Secondary sheave
- 22c: Secondary sheave shaft
- 22f: Front end of the secondary sheave
- 23: V-belt
- 24: Transmission case
- 26a: Entrance
- 30: Gear case
- 30a: Hole
- 30c: Tubular portion (tubular member) (first member) (connection opening)
- 30f: Tubular portion (tubular member) (first member) (connection opening)
- 31, 32, 33, 34: Gear
- 38: Axle
- 41: Filter (another filter)
- 42: Filter
- 50: Communication path
- 51: Cartridge (first member) (second member)
- 51a: (Connection opening of the second member) insertion joint
- 51b: (Connection opening of the first member) insertion joint
- 51c: Communication hole
- 51d: (Connection opening of the first member) receiving joint
- 51f: (Connection opening of the second member) receiving joint
- 52: Hose (second member)
- 52a: (Connection opening of the second member) receiving joint
- 52b: Open end
- 52c: (Connection opening of the second member) insertion joint
- C1: Center of the primary sheave
- C2: Center of the secondary sheave

## Claims

1. A power unit (10) for a motorcycle(1), comprising:
a belt type variable transmission (20) including a primary sheave (21) rotating based on driving of an engine of the motorcycle(1), a secondary sheave (22), a V-belt(23) wound around the primary sheave (21) and the secondary sheave (22), and a secondary sheave shaft(22c) rotating together with the secondary sheave (22);
a plurality of gears (31, 32, 33, 34) located between the secondary sheave shaft (22c) and an axle (38) of a driving wheel (5) of the motorcycle(1) and transmitting a torque of the secondary sheave shaft (22c) to the axle (38);
a gear case (30) accommodating the plurality of gears (31, 32, 33, 34); and
a breather device (9) including a communication path (50) communicating the inside and the outside of the gear case (30);
the communication path (50) includes:
a first member (51) having a connection opening (51b) of either an inserting type or an inserted type; and
a second member (52) which is at least partially located outside of the gear case (30) and has a connection opening (52a), of either an inserting type or an inserted type, connected with the connection opening (51b) of the first member (51); and
the second member (52) accommodates a filter (42),
wherein the second member (52) is a flexible hose, and wherein the filter (42) is inserted into the hose.

2. A power unit (10) according to claim 1, wherein:
a hole (30a) is formed in the gear case (30);
the first member (51) is a tubular member surrounding the hole (30a), the tubular member being formed in a direction extending to the inside and the outside of the gear case (30) from the hole (30a);
the second member (52) further includes a communication hole (52b) and is fixed to the gear case (30) by the connection opening (52a) thereof being connected to the tubular member; and
the filter (42) is located between the connection opening (52a) and the communication hole (52b) in the second member (52).

3. A power unit (10) according to claim 1, further comprising a transmission case (24) accommodating the belt type variable transmission (20); wherein the communication path (50) communicates the inside of the gear case (30) and the inside of the transmission case (24) to each other.

4. A power unit (10) according to claim 3, wherein:
the transmission case (24) has an entrance for introducing air; and
the power unit (10) further includes another filter(41) different from the filter (42), the another filter (41) being located downstream with respect to the entrance and upstream with respect to the communication path (50).

5. A power unit (10) according to claim 3, wherein:
the gear case (30) is located adjacent to the transmission case (24) in an axial direction of the secondary sheave shaft(22c); and
the communication path (50) is shorter than a length between a center of the primary sheave (21) and a center of the secondary sheave (22) as seen in the axial direction of the secondary sheave shaft(22c).

6. A power unit (10) according to claim 3, wherein:
the communication path (50) has an open end opened toward the inside of the transmission case (24); and
the open end is located above a line connecting a center of the primary sheave (21) and a center of the secondary sheave (22) as seen in an axial direction of the secondary sheave shaft (22c).

7. A power unit (10) according to claim 1, wherein:
where, in a direction in which a line connecting a center of the primary sheave (21) and a center of the secondary sheave (22) extends, the primary sheave (21) is located on a front side and the secondary sheave (22) is located on a rear side, the axle (38) is located rearward with respect to the center of the secondary sheave (22) as seen in an axial direction of the secondary sheave shaft (22c); and
the communication path (50) is located between a front end of the secondary sheave (22) and the axle (38) as seen in the axial direction of the secondary sheave shaft (22c).

8. A motorcycle (1), comprising a power unit (10) for a motorcycle (1) according to claim 1.

## Patentansprüche

1. Eine Leistungseinheit (10) für ein Motorrad (1), die folgende Merkmale aufweist:
ein variables Rahmen-Typ-Getriebe (20), das eine primäre Scheibe (21) umfasst, die sich dreht basierend auf dem Treiben eines Motors des Motorrads (1), eine zweite Scheibe (22), einen Keilriemen (23), der um die primäre Scheibe (21) und die sekundäre Scheibe (22) gewickelt ist, und eine Sekundäre-Scheibe-Welle (22c), die sich zusammen mit der sekundären Scheibe (22) dreht;
eine Mehrzahl von Getrieberädern (31, 32, 33, 34), die zwischen der Sekundäre-Scheibe-Welle (22c) und einer Achse (38) eines Antriebsrads (5) des Motorrads (1) angeordnet sind, und ein Drehmoment der Sekundäre-Scheibe-Welle (22c) auf die Achse (38) übertragen;
einen Getrieberadkasten (30), der die Mehrzahl der Getrieberäder (31, 32, 33, 34) unterbringt; und
eine Entlüftervorrichtung (9), die einen Kommunikationspfad (50) umfasst, der mit der Innenseite und Außenseite des Getrieberadkastens (30) kommuniziert;
wobei der Kommunikationspfad (50) Folgendes umfasst:
ein erstes Bauglied (51) mit einer Verbindungsöffnung (51b) entweder von einem Einfügungstyp oder von einem eingefügten Typ; und
ein zweites Bauglied (52), das zumindest teilweise außerhalb des Getrieberadkastens (30) angeordnet ist und eine Verbindungsöffnung (52a) aufweist, entweder von einem Einfügungstyp oder einem eingefügten Typ, verbunden mit der Verbindungsöffnung (51b) des ersten Bauglieds (51); und
wobei das zweite Bauglied (52) ein Filter (42) unterbringt,
wobei das zweite Bauglied (52) ein flexibler Schlauch ist und wobei das Filter (42) in den Schlauch eingefügt ist.

2. Eine Leistungseinheit (10) gemäß Anspruch 1, bei der:
ein Loch (30a) in dem Getrieberadkasten (30a) gebildet ist;
das erste Bauglied (51) ein röhrenförmiges Bauglied ist, das das Loch (30a) umgibt, wobei das röhrenförmige Bauglied in einer Richtung gebildet ist, die sich zu der Innenseite und der Außenseite des Getrieberadkastens (30) von dem Loch (30a) erstreckt;
wobei das zweite Bauglied (52) ferner ein Kommunikationsloch (52b) umfasst und an dem Getrieberadkasten (30) durch die Verbindungsöffnung (52a) desselben fixiert ist, die mit dem röhrenförmigen Bauglied verbunden ist; und
das Filter (42) zwischen der Verbindungsöffnung (52a) und dem Kommunikationsloch (52b) in dem zweiten Bauglied (52) angeordnet ist.

3. Eine Leistungseinheit (10) gemäß Anspruch 1, die ferner einen Getriebekasten (24) aufweist, der das variable Riemen-Typ-Getriebe (20) unterbringt; wobei der Kommunikationspfad (50) eine Kommunikation der Innenseite des Getrieberadkastens (30) mit der Innenseite des Getriebekastens (24) verursacht.

4. Eine Leistungseinheit (10) gemäß Anspruch 3, bei der:
der Getriebekasten (24) einen Eingang zum Einlassen von Luft aufweist; und
die Leistungseinheit (10) ferner ein anderes Filter (41) umfasst, das sich von dem Filter (42) unterscheidet, wobei das andere Filter (41) abwärts im Hinblick auf den Eingang und aufwärts im Hinblick auf den Kommunikationspfad (50) angeordnet ist.

5. Eine Leistungseinheit (10) gemäß Anspruch 3, bei der:
der Getrieberadkasten (30) benachbart zu dem Getriebekasten (24) in einer axialen Richtung der Sekundäre-Scheibe-Welle (22c) angeordnet ist; und
der Kommunikationspfad (50) kürzer ist als eine Länge zwischen einer Mitte der primären Scheibe (21) und einer Mitte der sekundären Scheibe (22) betrachtet in der axialen Richtung der Sekundäre-Scheibe-Welle (32c).

6. Eine Leistungseinheit (10) gemäß Anspruch 3, bei der:
der Kommunikationspfad (50) ein offenes Ende aufweist, das hin zu der Innenseite des Getriebekastens (24) geöffnet ist; und
das offene Ende über einer Leitung angeordnet ist, die eine Mitte der primären Scheibe (21) und eine Mitte der sekundären Scheibe (22) verbindet, betrachtet in einer axialen Richtung der Sekundäre-Scheibe-Welle (22c).

7. Eine Leistungseinheit (10) gemäß Anspruch 1, bei der:
wo, in einer Richtung, in der sich eine Leitung erstreckt, die eine Mitte der primären Scheibe (21) und eine Mitte der sekundären Scheibe (22) verbindet, die primäre Scheibe (21) an einer Vorderseite angeordnet ist und die sekundäre Scheibe (22) an einer Rückseite angeordnet ist, die Achse (38) rückwärts im Hinblick auf die Mitte der sekundären Scheibe (22) angeordnet ist, betrachtet in einer axialen Richtung der Sekundäre-Scheibe-Welle (22c); und
der Kommunikationspfad (50) zwischen einem Vorderende der sekundären Scheibe (22) und der Achse (38) angeordnet ist, betrachtet in der axialen Richtung der Sekundäre-Scheibe-Welle (22c).

8. Ein Motorrad (1), das eine Leistungseinheit (10) für ein Motorrad (1) gemäß Anspruch 1 aufweist.

## Revendications

1. Unité motrice (10) pour une motocyclette (1), comprenant:
une transmission variable de type courroie (20) comportant une poulie primaire (21) tournant sur base de l'entraînement d'un moteur de la motocyclette (1), une poulie secondaire (22), une courroie trapézoïdale (23) enroulée autour de la poulie primaire (21) et de la poulie secondaire (22), et un arbre de poulie secondaire (22c) tournant ensemble avec la poulie secondaire (22);
une pluralité d'engrenages (31, 32, 33, 34) situés entre l'arbre de poulie secondaire (22c) et un essieu (38) d'une roue d'entraînement (5) de la motocyclette (1) et transmettant un couple de l'arbre de poulie secondaire (22c) a l'essieu (38);
un boîtier d'engrenage (30) abritant la pluralité d'engrenages (31, 32, 33, 34); et
un dispositif reniflard (9) comportant un trajet de communication (50) communiquant l'intérieur et l'extérieur du carter d'engrenages (30);
le trajet de communication (50) comporte:
un premier élément (51) présentant une ouverture de connexion (51b) soit d'un type à insérer, soit d'un type inséré; et
un deuxième élément (52) qui est situé au moins partiellement à l'extérieur du boîtier d'engrenages (30) et qui présente une ouverture de connexion (52a) soit d'un type à insérer, soit d'un type inséré, reliée à l'ouverture de connexion (51b) du premier élément (51); et
le deuxième élément (52) abrite un filtre (42),
dans laquelle le deuxième élément (52) est un tuyau flexible, et dans laquelle le filtre (42) est inséré dans le tuyau.

2. Unité motrice (10) selon la revendication 1, dans laquelle:
un trou (30a) est formé dans le boîtier d'engrenage (30);
le premier élément (51) est un élément tubulaire entourant le trou (30a), l'élément tubulaire étant formé dans une direction s'étendant vers l'intérieur et l'extérieur du boîtier d'engrenage (30) à partir du trou (30a);
le deuxième élément (52) comporte par ailleurs un trou de communication (52b) et est fixé au boîtier d'engrenages (30) par l'ouverture de connexion (52a) connectée à l'élément tubulaire; et
le filtre (42) est situé entre l'ouverture de connexion (52a) et le trou de communication (52b) dans le deuxième élément (52).

3. Unité motrice (10) selon la revendication 1, comprenant par ailleurs un boîtier de transmission (24) abritant la transmission variable de type courroie (20), dans laquelle le trajet de communication (50) communique l'un avec l'autre l'intérieur du boîtier d'engrenages (30) et l'intérieur du boîtier de transmission (24).

4. Unité motrice (10) selon la revendication 3, dans laquelle:
le boîtier de transmission (24) présente une entrée pour l'introduction d'air; et
l'unité motrice (10) comporte par ailleurs un autre filtre (41) différent du filtre (42), l'autre filtre (41) étant situé en aval par rapport à l'entrée et en amont par rapport au trajet de communication (50).

5. Unité motrice (10) selon la revendication 3, dans laquelle:
le boîtier d'engrenage (30) est situé adjacent au boîtier de transmission (24) dans une direction axiale du deuxième arbre de poulie (22c), et
le trajet de communication (50) est plus court qu'une longueur entre un centre de la poulie primaire (21) et un centre de la poulie secondaire (22), vu dans la direction axiale de l'arbre de poulie secondaire (22c).

6. Unité motrice (10) selon la revendication 3, dans laquelle:
le trajet de communication (50) présente une extrémité ouverte vers l'intérieur du boîtier de transmission (24); et
l'extrémité ouverte se situe au-dessus d'une ligne connectant un centre de la poulie primaire (21) et un centre de la poulie secondaire (22), vu dans une direction axiale de l'arbre de poulie secondaire (22c).

7. Unité motrice (10) selon la revendication 1, dans laquelle:
dans une direction dans laquelle s'étend une ligne connectant un centre de la poulie primaire (21) et un centre de la poulie secondaire (22), la poulie primaire (21) se situe d'un côté avant et la poulie secondaire (22) se situe d'un côté arrière, l'essieu (38) se situe vers l'arrière par rapport au centre de la poulie secondaire (22), vu dans une direction axiale de l'arbre de poulie secondaire (22c); et
le trajet de communication (50) se situe entre une extrémité avant de la poulie secondaire (22) et l'essieu (38), vu dans la direction axiale de l'arbre de poulie secondaire (22c).

8. Motocyclette (1), comprenant une unité motrice (10) pour une motocyclette (1) selon la revendication 1.
